# EUROPÄISCHE PATENTSCHRIFT

(11) **EP 1 065 393 B1**
(45) Veröffentlichungstag und Bekanntmachung des Hinweises auf die Patenterteilung: **13.04.2005**
(21) Anmeldenummer: 99890209.2
(22) Anmeldetag: 28.06.1999
(51) Int. Cl.: F16C 9/04

(54) **Pleuel**
Connecting rod
Bielle

(43) Veröffentlichungstag der Anmeldung: 03.01.2001
(73) Patentinhaber: Capital Technology Beteiligungs GmbH, 8600 Bruck an der Mur (AT)
(72) Erfinder: Pankl, Gerold, Ing., 8600 Bruck an der Mur (AT)
(74) Vertreter: Patentanwälte BARGER, PISO & PARTNER

(56) Entgegenhaltungen:
- DE-A- 19 645 757
- US-A- 2 990 218
- US-A- 3 266 339
- US-A- 4 018 132

## Beschreibung

Die Erfindung betrifft ein Pleuel, dessen Teile durch Verbindungsschrauben in Form von Wurmschrauben miteinander verbunden sind, welche mit zwei unterschiedlichen Gewinden versehen sind, die mit entsprechenden in jedem der Pleuelteile zueinander fluchtend vorgesehenen Schraublöchern und Gewinden zusammenarbeiten, wobei die Verbindungsschrauben an einem ihrer Enden eine Aufnahme für einen Schraubendreher aufweist.

Derartige Pleuel sind in der größeren Bohrung geteilt und werden üblicherweise durch zwei Schrauben, die durch Durchgangslöcher der beiden Pleuelteile ragen und auf die Schrauben aufgeschraubte Muttern zusammengehalten.

Es gibt eine ganze Reihe von Ausgestaltungen, wie Paßstifte, Verzahnungen, Paßschrauben u.dgl., um die vorbestimmte Lage der beiden Pleuelteile zueinander sicherzustellen. Weiters gibt es eine ganze Reihe von Möglichkeiten und Vorschlägen, den Sitz der Muttern auf den Schrauben zu sichern und so ein Losewerden der beiden Pleuelteile zueinander zu verhindern.

Im Zuge der Entwicklung der Verbrennungskraftmaschinen wurde die Hubhöhe laufend verringert und die Drehgeschwindigkeit ebenso laufend erhöht, was insbesondere, aber nicht ausschließlich, den Rennsport betrifft.

In gleichem Maße ist es seit vielen Jahren ein Anliegen, die Motoren kleiner und leichter zu bauen, um in den Fahrzeugen mehr Raum und mehr Zuladung zur Verfügung zu haben oder aber, um die Fahrzeuge kleiner, leichter, wendiger und schneller bauen zu können.

Eine bisher die Größe des Kurbelgehäuses wesentlich mitbestimmende Kenngröße war dabei die weit über das übliche Pleueläußere ragende Mutter bzw. der Schraubenkopf, die zusätzlich auf entsprechenden, ebenfalls über das glatte Äußere des Pleuels ragende Sitze des Pleuels angeordnet werden mußten, um zu einer vertretbaren Krafteinleitung zu kommen und die so das Pleuel in den verschiedensten Richtungen größer als eigentlich notwendig machten und dabei auch die Größe des Kurbelraumes und damit die Schwerpunktlage des Motors ungünstig beeinflußten.

Der nächstliegende Stand der Technik ist die US 2,990,218 A, die ein Pleuel offenbart, bei dem die Kappe mit dem Pleuelkörper mittels Verbindungsschrauben in Form von Wurm- bzw. Stiftschrauben verbunden ist. Dabei ragt die Stiftschraube in zwei zueinander fluchtende Schraublöcher, die jeweils in der Kappe und im Pleuelkörper eingebracht sind. Jede Schraube weist ein an ihrem einen Ende ein Rechtsgewinde und an ihrem anderen Ende ein Linksgewinde auf, sodass durch Verdrehen der Schraube die beiden Pleuelteile zueinander gezogen werden. In einer anderen Ausführungsform können die beiden Gewindeabschnitte der Schrauben in dieselbe Richtung drehen aber unterschiedliche Gewindesteigungen aufweisen. Die Schraube weist an einem Ende eine Aufnahme für einen Imbusschlüssel auf.

Ein ähnliches Pleuel offenbart die US 3,266,339 A, das ebenfalls differentielle Schrauben umfasst, wobei die Weiterentwicklung zur US 2,990,218 A darin besteht, dass die Schrauben über Frontflächen, die normal zu den Schraublöchem eingebracht bzw. eingefräst sind, überstehen. An einem Ende der Schraube befindet sich eine Sechskantaufnahme für einen Schraubenschlüssel.

Eine Kopfschraube, die sich unter anderem auch für den Einsatz in Pleuel eignet, ist in der US 4,018,132 A beschrieben. Die in Fig. 3 gezeigte Schraube weist zwei Abschnitte unterschiedlicher Gewindesteigung auf. Ein Abschnitt ist rechtsdrehend, während der andere linksdrehend ist.

Die DE 196 45 757 A1 beschreibt eine Schraube mit zwei Abschnitten unterschiedlicher Gewindesteigung und unterschiedlichen Gewindedurchmessers sowie einem Kopf zum Ansetzen eines Angriffsabschnitts zum Ansetzen eines Eindrehgerätes. Derartige Schrauben eignen sich insbesondere zur Befestigung von plattenförmigen Bauteilen auf einem Untergrund.

Es ist ein Ziel der Erfindung, den Motor in einer niedrigeren Schwerpunktlage anordnen zu können.

Um dieses Ziel zu erreichen, sind die Maßnahmen des Anspruchs 1 vorgesehen.

Bevorzugte Ausführungsformen des erfindungsgemäßen Pleuels sind den Unteransprüchen zu entnehmen.

Durch diese erfindungsgemäße Maßnahmen entfallen all die zusätzlichen Flächen und Volumina, die im Stand der Technik für die Anlage der Schraubenköpfe bzw. der Muttern notwendig sind, so daß die erfindungsgemäßen Pleuel kleiner und leichter als Pleuel gemäß dem Stand der Technik bei gleichen Anforderungen und Kurbelwellenabmessungen sind. Gleichzeitig wird durch die erfindungsgemäße Maßnahme die Hüllkurve der Pleuel merklich verkleinert, so daß es möglich ist, das Kurbelgehäuse kleiner als im Stand der Technik auszubilden, was ebenfalls Gewicht und Platz spart.

Die Erfindung ist an Hand eines Ausführungsbeispieles näher erläutert. Dabei zeigt
die Fig. 1 ein erfindungsgemäßes Pleuel in Seitenansicht, teilweise im Schnitt,
die Fig. 2 eine Seitenansicht, ebenfalls teilweise im Schnitt,
die Fig. 3 eine Draufsicht und
die Fig. 4 das Pleuel gemäß den Fig. 1 bis 3 in perspektivischer Ansicht, ebenfalls teilweise im Schnitt.

Wie insbesondere aus Fig. 1 ersichtlich ist, ist ein erfindungsgemäßes Pleuel äußerst schlank und leicht gebaut. Zur Verbindung des oberen Pleuelteiles 1 mit dem unteren Pleuelteil 2 weisen diese zwei Durchgangsbohrungen 3',3" auf, wobei im gezeigten Ausführungsbeispiel die im oberen Pleuelteil 1 befindlichen Bohrungen 3' ein Rechtsgewinde und die im unteren Pleuelteil 2 befindlichen Bohrungen 3" ein Linksgewinde aufweisen. Selbverständlich können die Gewinde auch umgekehrt angeordnet sein.

Zum Zusammenbau werden zwei Wurmschrauben 4, die an ihrem einen Endbereich ein Rechtsgewinde, an ihrem anderen Endbereich ein Linksgewinde aufweisen, jeweils um einen vorbestimmten Winkel in einen der beiden Pleuelteile eingeschraubt, sodann wird der andere Pleuelteil fluchtend zum ersten Pleuelteil positioniert und durch weiteres, simultanes Verdrehen der beiden Schrauben 4 werden die beiden Teile 1,2 miteinander verbunden. Um die notwendige Lagegenauigkeit zu erreichen, können, wie beim Stand der Technik, zusätzliche Führungsstifte, Paßstifte, Verzahnungen, od.dgl. vorgesehen sein.

Erfindungsgemäß sind in einer bevorzugten Ausführungsform die Schrauben 4 nach Art von Dehnschrauben mit verjüngtem Schaft ausgebildet und können so einerseits in der Lage der beiden Bauteile zueinander gewisse Toleranzen ertragen, anderseits wird so durch die aufbringbare Vorspannung eine Schraubensicherung geschaffen.

Zum Eindrehen der Schrauben können diese mit einem Imbus oder jedem anderen bekannten Schraubendrehsystem ausgestattet sein, wobei es zur Momentenverteilung unter Umständen vorteilhaft ist, ein solches System an beiden Enden jeder Schraube vorzusehen.

Zur Übertragung der üblicherweise auftretenden Kräfte ist die Verwendung entsprechender Gewinde, bevorzugt Feingewinde, vorteilhaft.

Die Erfindung ist an Hand eines Ausführungsbeispieles dargestellt und beschrieben worden, bei dem zwei Verbindungsschrauben 4 vorgesehen sind, selbstverständlich ist es auch möglich, die Erfindung bei Pleueln anzuwenden, bei denen mehr als zwei Schrauben verwendet werden. Gleichermaßen ist es nicht notwendig, daß, wie im dargestellten Ausführungsbeispiel, die Teilung des Pleuels normal zu dessen Symmetrieebene erfolgt, auch bei einer schrägen Teilung kann die Erfindung mit Vorteil verwendet werden.

Bei den verwendeten Gewinden ist es nicht unbedingt notwendig, das Links- und das Rechtsgewinde mit gleicher Ganghöhe auszubilden und es ist schließlich auch möglich, statt gegenläufiger Gewinde Differentialgewinde vorzusehen, die in die gleiche Richtung drehen, aber mit unterschiedlicher Ganghöhe ausgebildet sind. Es ist dann zur Montage notwendig, die Verbindungsschrauben tief in das Innengewinde mit der kleineren Ganghöhe zu schrauben, wodurch beim Anschließen dem Einschrauben in das Gewinde mit größerer Ganghöhe das dortige Einschrauben rascher erfolgt, als das Ausschrauben aus dem Gewinde mit kleinerer Ganghöhe, wodurch die beiden Pleuelteile zueinander gezogen werden.

Der Vorteil gegenüber den ungleichsinnigen Gewinden kann darin liegen, daß durch den größeren Verdrehwinkel der Schrauben pro Einheit der Annäherung der beiden Bauteile ein feineres Justieren möglich ist. Nachteilig dabei ist die Notwendigkeit des extrem tiefen Einschraubens in das niedrigere Gewinde vor Beginn des Zusammenbaues, was nicht immer möglich ist.

Die Schraubensicherung kann durch die Verwendung von Dehnschrauben oder auch unabhängig davon erfolgen, so kann als Schraubsicherung jede bekannte Maßnahme verwendet werden, sei sie nun chemischer oder mechanischer Natur, insbesondere beruhend auf Kraftschluß oder Formschluß.

## Patentansprüche

1. Pleuel, dessen Teile (1, 2) durch Verbindungsschrauben (4) in Form von Wurmschrauben miteinander verbunden sind, welche mit zwei unterschiedlichen Gewinden versehen sind, die mit entsprechenden in jedem der Pleuelteile (1, 2) zueinander fluchtend vorgesehenen Schraublöchem und Gewinden (3', 3") zusammenarbeiten, wobei die Verbindungsschrauben (4) an einem ihrer Enden eine Aufnahme für einen Schraubendreher aufweisen, **dadurch gekennzeichnet, dass** die Verbindungsschrauben (4) am anderen ihrer Enden ebenfalls eine Aufnahme für einen Schraubendreher aufweisen.

2. Pleuel nach Anspruch 1, **dadurch gekennzeichnet, dass** die Verbindungsschrauben (4) zumindest in einem Bereich (5) ihres Schaftes einen verjüngten Durchmesser aufweisen.

3. Pleuel nach Anspruch 1 oder 2, **dadurch gekennzeichnet, dass** die beiden Gewinde (3',3") unterschiedliche Drehrichtung und/oder unterschiedliche Ganghöhe aufweisen.

## Claims

1. Connecting rod, the parts (1, 2) of which are connected to one another by connecting screws (4) in the form of headless pins which are provided with two different threads which interact with corresponding screw holes and threads (3', 3'') which are provided in each of the connecting-rod parts (1, 2) in a manner aligned with one another, the connecting screws (4) having a receptacle for a screwdriver at one of their ends, **characterized in that**, at their other end, the connecting screws (4) likewise have a receptacle for a screwdriver.

2. Connecting rod according to Claim 1, **characterized in that**, at least in a region (5) of their shaft, the connecting screws (4) have a tapered diameter.

3. Connecting rod according to Claim 1 or 2, **characterized in that** the two threads (3', 3'') have a different rotational direction and/or a different lead.

## Revendications

1. Bielle, dont les parties (1, 2) sont reliées entre elles par des vis de liaison (4) se présentant sous la forme de goujons filetés, qui sont pourvus de deux filetages différents, qui coopèrent avec des trous taraudés et des filetages (3', 3") prévus d'une manière alignée entre eux dans chacune des parties (1, 2) de la bielle, les vis de liaison (4) possédant, sur une de leurs extrémités, un évidement pour un tournevis, **caractérisée en ce que** les vis de liaison (4) possèdent également, sur l'autre de leurs extrémités, un évidement pour un tournevis.

2. Bielle selon la revendication 1, **caractérisée en ce que** les vis de liaison (4) possèdent un diamètre réduit au moins dans une partie (5) de leur arbre.

3. Bielle selon la revendication 1 ou 2, **caractérisé en ce que** les deux filetages (3', 3") possèdent des sens de rotation différents et/ou des hauteurs de filet différentes.
